# EUROPEAN PATENT APPLICATION

(11) **EP 4 343 083 A1**
(43) Date of publication of application: **27.03.2024**
(21) Application number: 22382883.1
(22) Date of filing: 26.09.2022
(51) Int. Cl.: E04H 12/12, E02D 27/42, E04H 12/34

(54) **CONCRETE SEGMENT OF A SECTION OF A WIND TURBINE TOWER, MOULD CONFIGURED TO CAST SUCH A CONCRETE SEGMENT AND METHOD OF ASSEMBLING A WIND TURBINE COMPRISING SUCH A CONCRETE SEGMENT**

(71) Applicant: Nordex Energy Spain, S.A.U., 31395 Barasoain (Navarra) (ES)
(72) Inventor: GARDUÑO, Aitor, 31395 Barasoain (ES)
(74) Representative: Pons

(57) **Abstract**

The object of the invention is a concrete segment of a section of a wind turbine tower which minimizes the undesirable local effects in the connection area between adjacent concrete sections, a section comprising at least two concrete segments, a set comprising two adjacent sections and a joint disposed between the two adjacent sections, a tower comprising at least one set, a mould configured to cast a concrete segment and a method of assembling a wind turbine

## Description

### OBJECT OF THE INVENTION

The object of the invention is a concrete segment of a section of a wind turbine tower which minimizes the undesirable local effects in the connection area between adjacent concrete sections.

The invention also relates to a section comprising at least two concrete segments, a set comprising two adjacent sections and a joint disposed between the two adjacent sections, a tower comprising at least one set, a mould configured to cast a concrete segment and a method of assembling a wind turbine.

### BACKGROUND OF THE INVENTION

The wind turbines comprise a tower, a nacelle which houses the electrical generator and a rotor formed in turn by at least two blades. The tower of the wind turbine supports the nacelle and the rotor. Large wind turbines have steel, lattice, or reinforced concrete towers or even mixed-type towers, the latter comprising sections of different materials, for example, a lower section of concrete and an upper section of steel or lattice.

Due to the height of the wind turbines, the tower has to be divided into several annular sections which are stacked during the wind turbine assembly stage thus forming the full height of the tower. Dividing the tower into sections has the advantage that each section has a size such that its transport by road or rail is easier.

One of the most commonly used materials for large towers is concrete, since it involves competitive costs and performance compared to those for the production of steel towers of similar characteristics. However, the weight of each concrete tower section can easily exceed one hundred tons, this fact being infrequent for metal tower sections, so stacking the concrete sections requires heavy-tonnage lifting and positioning means. The cost of using such lifting and positioning means, which may be for example a crane, is directly related to the tonnage and height that it is capable of handling and the time of use thereof. This high-tonnage crane is also used for lifting and positioning the nacelle, as the weight of the nacelle may also exceed 100 tons.

The design of wind turbine components and the design of the connections between them once placed, should take into account the loads they will have to bear throughout their useful life to ensure the proper functioning thereof. In particular, the connections between different concrete sections of the tower are adapted to withstand the loads they will have to bear throughout their useful life, such as gravitational loads, assembly loads, inertial loads, aerodynamic loads, operational loads and other loads that depend on the location where the wind turbine is to be installed, such as earthquakes.

Currently, some wind turbine towers with concrete segments include a geometry of the connection area between adjacent concrete sections which comprises an inward thickness increase towards the inside of the tower with respect to the wall thickness in a central part of each concrete section of the tower. This inward thickness increase towards the inside of the tower is necessary for providing a wider contact area for the concrete-grout (or concrete-resin) interfaces in the horizontal joint between adjacent sections so that the stresses can be stood by the filler material (grout or resin) used in the horizontal joints, allowing for some manufacturing or pouring deficiencies of such filler material.

However, this state-of-the-art geometry gives rise to undesirable local effects in the concrete segments, such as:
- Local bending moments in transition region from the central part and the connection area of the concrete segment that increase concrete compressive stresses and that require additional reinforcement for tensile forces at the beginning of the connection area; and
- Circumferential compressive and tensile stresses close to thickness changes.

The present invention solves the problems described above by providing a concrete segment of a section of a wind turbine tower which minimizes the undesirable local effects in the connection area between adjacent concrete sections.

### DESCRIPTION OF THE INVENTION

The invention relates to a concrete segment of a section of a wind turbine tower, the concrete segment comprising:
- a central area comprising an inner surface, an outer surface and a central surface located at the same distance from the inner surface as from the outer surface, wherein the central area further comprises a first wall thickness defined as the distance between the inner surface and the outer surface; and
- at least one connection area comprising a horizontal connection flange, wherein the at least one connection area is configured to be connected, in use, to an adjacent connection area of an adjacent concrete segment, the adjacent connection area comprising an adjacent horizontal connection flange, by means of the horizontal connection flange, wherein the at least one connection area comprises a second wall thickness being bigger than the first wall thickness, the second wall thickness comprising an inward thickness increase with respect to the first wall thickness,
wherein the second wall thickness of the at least one connection area further comprises an outward thickness increase with respect to the first wall thickness.

The expression "inward thickness increase" means inward thickness increase towards the inside of the wind turbine tower, when in use, the concrete segment is disposed in the tower.

The expression "outward thickness increase" means outward thickness increase towards the outside of the wind turbine tower, when in use, the concrete segment is disposed in the tower.

The expression "central surface" is an interior surface of the concrete segment, being non-accessible, i.e., it is a virtual central surface of the concrete segment.

Preferably, in use, the central surface is coincident with a load path intended to be transmitted along the central area.

In this way, the concrete segment so configured provides the following structural improvements:
- The local bending is avoided, reducing drastically fatigue damage in concrete and avoiding additional local reinforcements;
- Circumferential stresses are minimized; and
- Local effects and stresses concentrations in a transition region from the central area to the connection are minimized with the new proposed geometry.
- Uncertainties and undesirable local effects are avoided.

All this is translated in either, i) less need of reinforcements at horizontal connection flange and above all, an important improvement of fatigue life in concrete, making it possible to reduce the concrete quality around 10-15 MPa (e.g., from C80 to C65) or ii) alternatively, a reduction in the thickness of the walls while keeping the same concrete quality, decreasing in this way the amount of concrete and achieving lighter tower sections, easier to lift with cranes, or even iii) a combination of both i) and ii).

Preferably, in use, the load path intended to be transmitted along the central area is coincident with a load path intended to be transmitted along the at least one connection area.

Preferably, in use, the load path intended to be transmitted along the at least one connection area is substantially straight. More preferably, the load path intended to be transmitted along the concrete segment is substantially straight.

Optionally, the inward thickness increase is bigger than or equal to the outward thickness increase.

Preferably, the inward thickness increase is bigger than the outward thickness increase at least in a part of the at least one connection area.

Also preferably, the inward thickness increase is bigger than the outward thickness increase along the whole extension of the at least one connection area.

Optionally, the inward thickness increase and the outward thickness increase are symmetrical with regards to the central surface.

Optionally, the inward thickness increase and the outward thickness increase are asymmetrical with regards to the central surface.

Optionally, the inward thickness increase and/or the outward thickness increase comprises at least one oblique part (transition part) and at least one substantially vertical part, wherein the thickness increases in the at least one oblique part.

Preferably, the at least one substantially vertical part is adjacent to the horizontal connection flange.

Preferably, the at least one substantially vertical part is adjacent to the horizontal connection flange and follows a conicity of the tower (preferably a conicity slope between 0.5º-3º with a vertical plane).

Preferably, the oblique part comprises an oblique part slope, wherein the oblique part slope is between 75º and 90° with a horizontal plane.

Preferably, the ratio between the first wall thickness and the second wall thickness is between 25% and 70%.

Optionally, the at least one connection area comprises a height, and the concrete segment comprises a height, wherein the height of the at least one connection area is between 5% and 30% of the height of the concrete segment.

Preferably, the oblique part comprises a height, wherein the height of the oblique part is between 30% and 90% of the height of the at least one connection area.

Optionally, the concrete segment comprises just one connection area comprising a second wall thickness bigger than the first thickness, and is located in an upper end of the segment.

Optionally, the concrete segment comprises two connection areas, one of them disposed in an upper end of the concrete segment and the other disposed in a lower end of the concrete segment comprising a second wall thickness bigger than the first wall thickness. Preferably, the second wall thickness at the upper end of the concrete segment is between 100% and 225% of the second wall thickness at the lower end of the concrete segment, more preferably between 100% and 125%.

Optionally, the first wall thickness increases from the lower part to the upper part of the central part of the concrete segment.

Optionally, the first wall thickness is constant from the lower part to the upper part of the central part of the concrete segment.

The invention also relates to a section comprising at least two concrete segments as described above.

The invention also relates to a set comprising at least two adjacent sections, being an upper section and a lower section, and a substantially horizontal joint disposed between the two adjacent sections, wherein the at least one connection area of the at least two concrete segments of the upper section is disposed in a lower end of the concrete segments and the at least one connection area of the at least two concrete segments of the lower section is disposed in an upper end of the concrete segments.

Optionally, the at least one connection area of the at least two concrete segments of the lower section comprises an outward thickness increase towards the outside of the wind turbine tower being substantially equal to the outward thickness increase towards the outside of the wind turbine tower of the at least one connection area of the at least two concrete segments of the upper section.

Preferably, the at least one connection area of the at least two concrete segments of the lower section comprises the inward thickness increase towards the inside of the wind turbine tower being bigger than the inward thickness increase towards the inside of the wind turbine tower of the at least one connection area of the at least two concrete segments of the upper section.

Preferably, the at least one connection area of the at least two concrete segments of the lower section comprises the inward thickness increase towards the inside of the wind turbine tower being equal to the inward thickness increase towards the inside of the wind turbine tower of the at least one connection area of the at least two concrete segments of the upper section.

The invention also relates to a tower comprising at least one set as described above.

Preferably, the tower comprises at least two sets as described above, an upper set and a lower set, wherein the outward thickness increase of the second wall thickness of the at least one connection area of the upper set is bigger than the outward thickness increase of the second wall thickness of the at least one connection area of the lower set.

Preferably, the tower comprises at least two sets as described above, an upper set and a lower set, each one of them comprising an upper section and a lower section, wherein the first thickness of the central area of the upper section and the lower section of the lower set is constant, and the first thickness of the central area of the at least one of the upper section and the lower section of the upper set comprises an increasing thickness with the height. In particular, the first thickness of the central area of the upper sections and the lower sections of the lower set are equal.

Preferably, the first wall thickness of the lower section is smaller than the first wall thickness of the upper section and the second wall thickness of a lower section is smaller than the second wall thickness of the upper section, for at least one of the two sets described above.

Preferably, the first wall thickness of the central area of the upper section and the lower section of the lower set are equal and the second wall thickness of the at least one connection area of the upper section and the lower section of the lower set are equal.

The invention also relates to a wind turbine comprising a tower as described above.

The invention also relates to a mould configured to cast a concrete segment as described above, wherein the mould comprises a base, a counter-mould and two lateral sides, wherein the base comprises:
- a central surface comprising an exterior diameter; and
- at least one connection surface disposed adjacent to one lateral side, wherein the at least one connection surface comprises at least one exterior diameter greater than exterior diameter of the central surface.

The invention also relates to a method of assembling a wind turbine comprising at least a step of assembling a set as described above comprising the steps of:
- raising a lower section;
- raising the upper section onto the lower section;
- performing the horizontal joint disposed between the lower section and the upper section.

### DESCRIPTION OF THE FIGURES

To complement the description being made and for the sake of a better understanding of the characteristics of the invention according to a preferred practical embodiment thereof, attached as an integral part of said description are a set of drawings wherein, for the purpose of illustration and not limiting the scope of the invention, the following is shown:

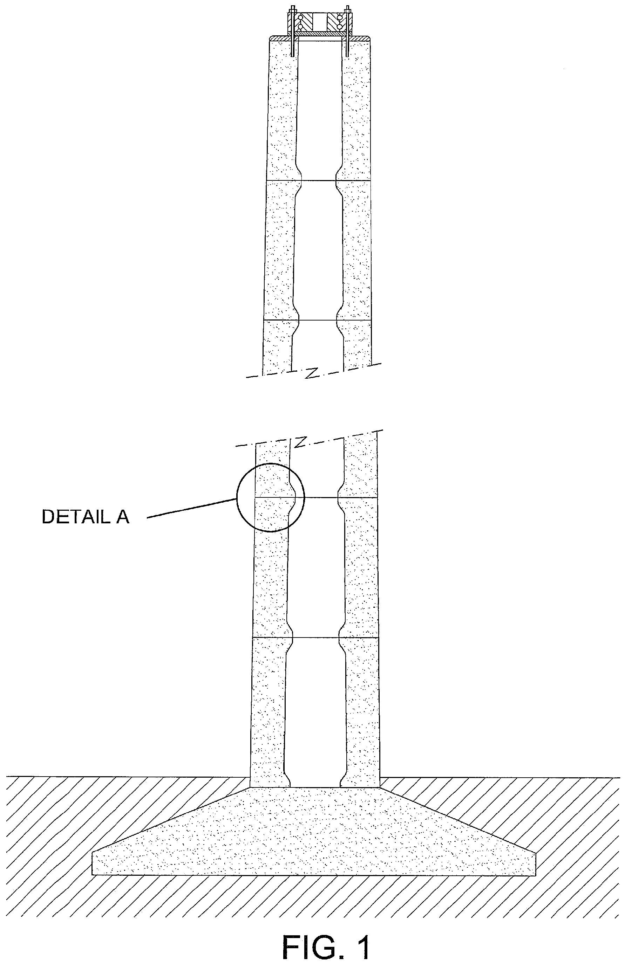

Figure 1 shows a concrete tower of a wind turbine comprising at least two concrete sections, wherein each one of the concrete sections comprises at least one concrete segment according to the state of the art.

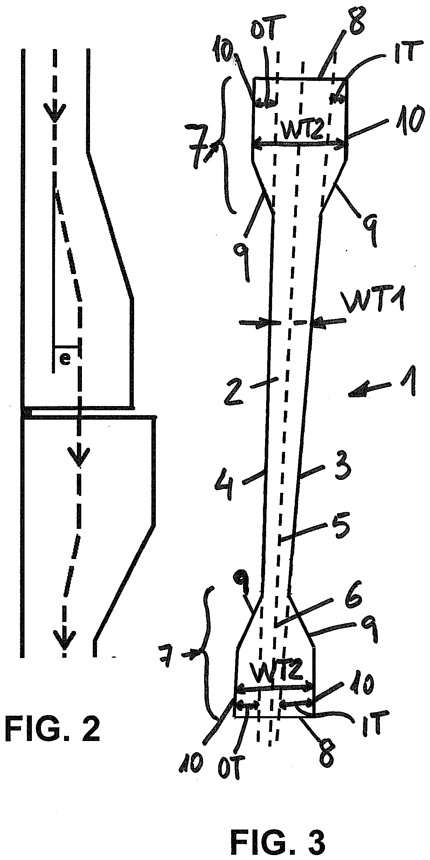

Figure 2 shows a detail A of Figure 1, wherein the eccentricity, e, of the load path for two concrete adjacent sections is shown.
Figure 3 shows a concrete segment according to the invention.
Figure 4 shows an upper concrete segment of an upper section and a lower concrete segment of a lower section according to a first preferred embodiment.
Figure 5 shows an upper concrete segment of an upper section and a lower concrete segment of a lower section according to a second preferred embodiment.
Figure 6 shows an upper concrete segment of an upper section and a lower concrete segment of a lower section according to a third preferred embodiment.

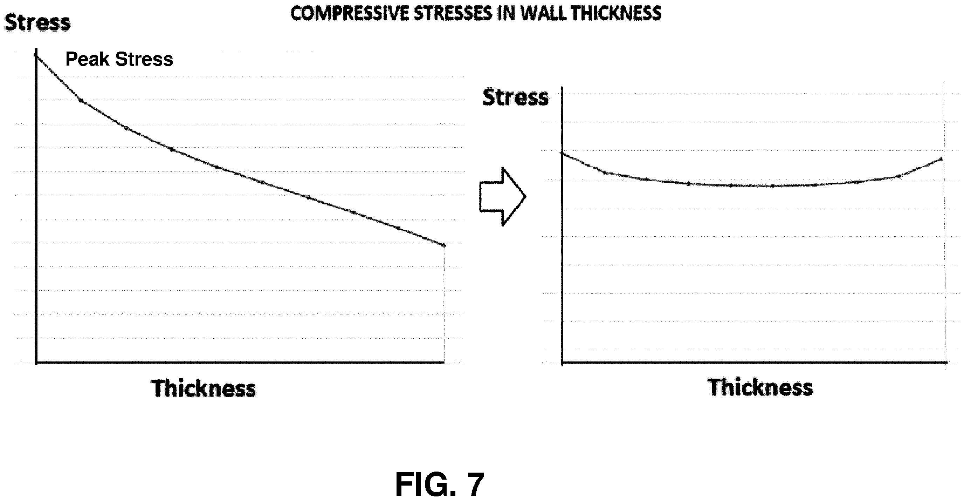

Figure 7 shows the compressive stresses in wall thickness of the concrete segment according to a concrete segment of the state of the art (left side) and according to the invention (right side).

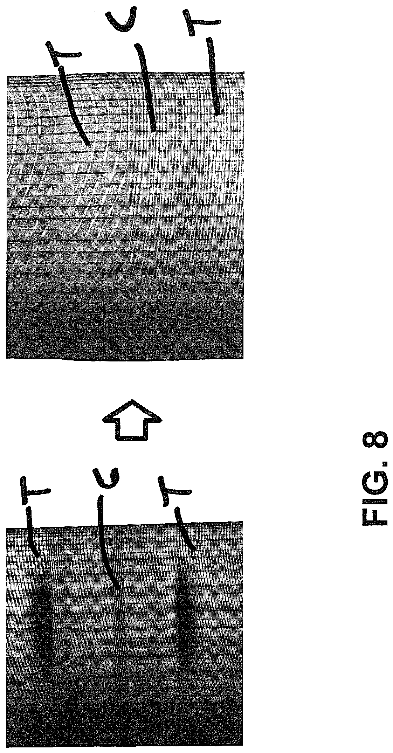

Figure 8 shows the circumferential stresses in an upper concrete segment of an upper section and a lower concrete segment of a lower section according to the state of the art (left side) and according to the invention (right side).

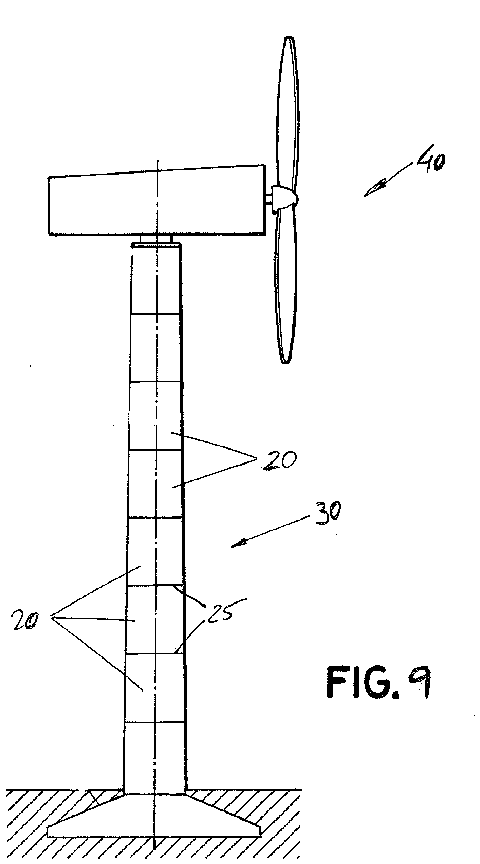

Figure 9 shows a wind turbine according to another aspect of the invention.

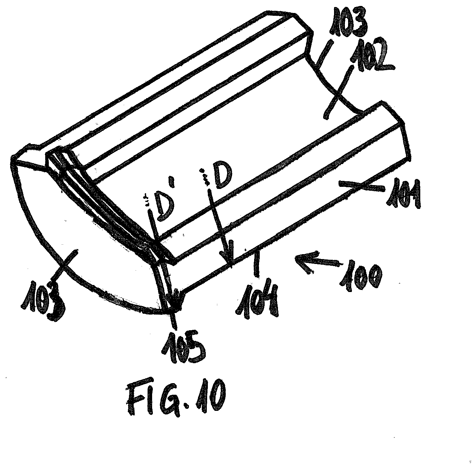

Figure 10 shows a mould according to another aspect of the present invention.
Figure 11 shows an upper concrete segment of an upper section and a lower concrete segment of a lower section according to the invention wherein the interior framework of each segment is shown.

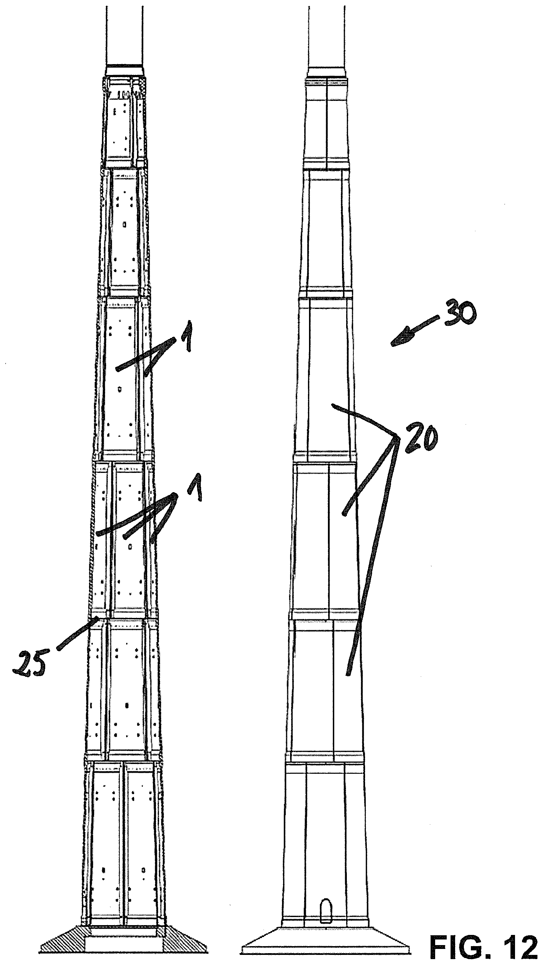

Figure 12 shows on the left side a cross-section according to a vertical plane of a tower comprising at least one set comprising at least two adjacent sections according to the invention, and on the right side, said tower according to the invention.

### PREFERRED EMBODIMENT OF THE INVENTION

The following is a detailed description of the concrete segment (1) of a section (20) of a wind turbine tower (30) according to the invention, wherein the concrete segment (1) comprises:
- a central area (2) comprising an inner surface (3), an outer surface (4) and a central surface (5) located at the same distance from the inner surface (3) as from the outer surface (4), wherein the central area (2) further comprises a first wall thickness (WT1) defined as the distance between the inner surface (3) and the outer surface (4), wherein, in use, the central surface (5) is coincident with a load path (6) intended to be transmitted along the central area (2); and
- at least one connection area (7) comprising a horizontal connection flange (8), wherein the at least one connection area (7) is configured to be connected, in use, to an adjacent connection area (7) of an adjacent concrete segment (1), the adjacent connection area (7) comprising an adjacent horizontal connection flange (8), by means of the horizontal connection flange (8), wherein the at least one connection area (7) comprises a second wall thickness (WT2) being bigger than the first wall thickness (WT1), the second wall thickness (WT2) comprising an inward thickness increase (IT) towards the inside of the wind turbine tower (30) with respect to the first wall thickness (WT1),
wherein the second wall thickness (WT2) of the at least one connection area (7) further comprises an outward thickness increase (OT) towards the outside of the wind turbine tower (30) with respect to the first wall thickness (WT1).

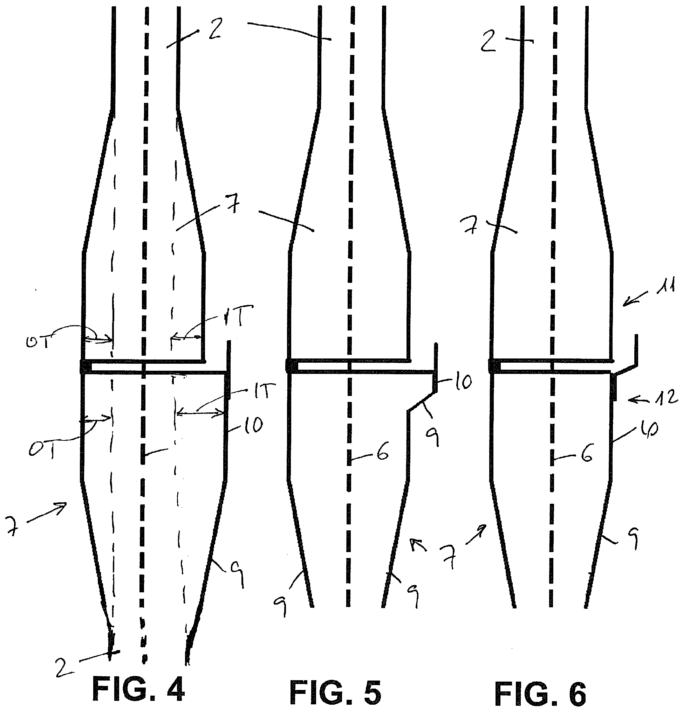

According to a first preferred embodiment shown in Figure 4, the concrete segment (1) comprises an upper connection area (7), wherein the inward thickness increase (IT) is bigger than the outward thickness increase (OT) along the whole of the upper connection area (7), and a lower connection area (not shown), wherein the inward thickness increase (IT) is equal to the outward thickness increase (OT) (please note that this lower connection area would be similar to that lower connection area represented for the upper concrete segment (1) of Figure 4). In this embodiment, the inward thickness increase (IT) and the outward thickness increase (OT) of the upper connection area (7) are asymmetrical with regards to the central surface (5), whereas the inward thickness increase (IT) and the outward thickness increase (OT) of the lower connection area (not shown) are symmetrical with regards to the central surface (5). Also, the inward thickness increase (IT) and the outward thickness increase (OT) comprises one oblique part (9) and one substantially vertical part (10), wherein the thickness increases in the one oblique part (9).

According to a second preferred embodiment shown is Figure 5, the concrete segment (1) comprises an upper connection area (7), wherein the inward thickness increase (IT) is bigger than the outward thickness increase (OT) in a part of the upper connection area (7), and a lower connection area (not shown), wherein the inward thickness increase (IT) is equal to the outward thickness increase (OT) (please note that this lower connection area would be similar to that lower connection area represented for the upper concrete segment (1) of Figure 5). In this embodiment, the inward thickness increase (IT) and the outward thickness increase (OT) of the upper connection area (7) are asymmetrical with regards to the central surface (5), whereas the inward thickness increase (IT) and the outward thickness increase (OT) of the lower connection area (not shown) are symmetrical with regards to the central surface (5). Also, the inward thickness increase (IT) and the outward thickness increase (OT) comprises two oblique parts (9) and two substantially vertical parts (10), wherein the thickness increases in the oblique parts (9).

According to a third preferred embodiment shown is Figure 6, the concrete segment (1) comprises an upper connection area (7) wherein the inward thickness increase (IT) is equal to the outward thickness increase (OT), and a lower connection area (not shown), wherein the inward thickness increase (IT) is equal to the outward thickness increase (OT) (please note that this lower connection area would be similar to that lower connection area represented for the upper concrete segment (1) of Figure 6). In this embodiment, the inward thickness increase (IT) and the outward thickness increase (OT) of the upper connection area (7) are symmetrical with regards to the central surface (5), and the inward thickness increase (IT) and the outward thickness increase (OT) of the lower connection area (not shown) are also symmetrical with regards to the central surface (5). Also, the inward thickness increase (IT) and the outward thickness increase (OT) comprises one oblique part (9) and one substantially vertical part (10), wherein the thickness increases in the one oblique part (9).

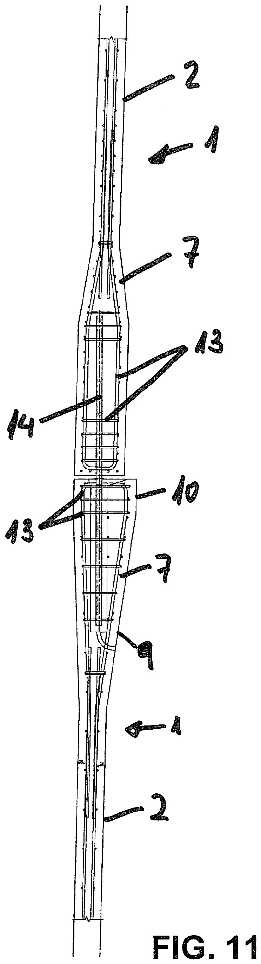

Figure 11 shows an upper concrete segment (1) of an upper section and a lower concrete segment (1) of a lower section according to the invention wherein it is shown the interior framework (13) of each segment (1) and the connecting rods (14) configured to connect the upper section and the lower section, wherein preferably, the connecting rods (14) are disposed in the at least one connection area (7). More preferably, the connecting rods (14) extend at least partially along the at least one connection area (7), preferably till the oblique part (9). More preferably, the connecting rods (14) extend at least partially along the at least one connection area (7), preferably till a whole length of the oblique part (9).The invention also relates to a section (20) comprising at least two concrete segments (1) of any of the embodiments described above.

The invention also relates to a set comprising two adjacent sections (20), being an upper section and a lower section, and a horizontal joint (25) disposed between the two adjacent sections (20), wherein the at least one connection area (7) of the at least two concrete segments (1) of the upper section is disposed in a lower end (11) of the concrete segments (1) and the at least one connection area (7) of the at least two concrete segments (1) of the lower section is disposed in an upper end (12) of the concrete segments (1).

In all the embodiments described above, the at least one connection area (7) of the at least two concrete segments (1) of the lower section comprises an outward thickness increase (OT) towards the outside of the wind turbine tower (30) being substantially equal to the outward increased wall thickness (OT) towards the outside of the wind turbine tower (30) of the at least one connection area (7) of the at least two concrete segments (1) of the upper section.

In the first and second preferred embodiments, the at least one connection area (7) of the at least two concrete segments (1) of the lower section comprises the inward thickness increase (IT) towards the inside of the wind turbine tower (30) being bigger than the inward thickness increase (IT) towards the inside of the wind turbine tower (30) of the at least one connection area (7) of the at least two concrete segments (1) of the upper section.

In the third preferred embodiment, the at least one connection area (7) of the at least two concrete segments (1) of the lower section comprises the inward thickness increase (IT) towards the inside of the wind turbine tower (30) being equal to the inward thickness increase (IT) towards the inside of the wind turbine tower (30) of the at least one connection area (7) of the at least two concrete segments (1) of the upper section.

The invention also relates to a tower (30) comprising at least one set as any of the described above.

The invention also relates to a wind turbine (40) comprising a tower (30) as described above.

The invention also relates to a mould (100) configured to cast a concrete segment (1) of any of the embodiments described above, wherein the mould (100) comprises a base (101), a counter-mould (102) and two lateral sides (103), wherein the base (101) comprises:
- a central surface (104) comprising an exterior diameter (D); and
- at least one connection surface (105) disposed adjacent to one lateral side (103), wherein the at least one connection surface (105) comprises an exterior diameter (D') greater than exterior diameter (D) of the central surface (104).

## Claims

1. Concrete segment (1) of a section (20) of a wind turbine tower (30), wherein the concrete segment (1) comprises:
- a central area (2) comprising an inner surface (3), an outer surface (4) and a central surface (5) located at the same distance from the inner surface (3) as from the outer surface (4), wherein the central area (2) further comprises a first wall thickness (WT1) defined as the distance between the inner surface (3) and the outer surface (4); and
- at least one connection area (7) comprising a horizontal connection flange (8), wherein the at least one connection area (7) is configured to be connected, in use, to an adjacent connection area (7) of an adjacent concrete segment (1), the adjacent connection area (7) comprising an adjacent horizontal connection flange (8), by means of the horizontal connection flange (8), wherein the at least one connection area (7) comprises a second wall thickness (WT2) being bigger than the first wall thickness (WT1), the second wall thickness (WT2) comprising an inward thickness increase (IT) with respect to the first wall thickness (WT1);
**characterised in that** the second wall thickness (WT2) of the at least one connection area (7) further comprises an outward thickness increase (OT) with respect to the first wall thickness (WT1).

2. The concrete segment (1) of claim 1, wherein in use, the central surface (5) is coincident with a load path (6) intended to be transmitted along the central area (2).

3. The concrete segment (1) of claim 2, wherein in use, the load path (6) intended to be transmitted along the central area (2) is coincident with a load path intended to be transmitted along the at least one connection area (7).

4. The concrete segment (1) of claim 3, wherein in use, the load path (6) intended to be transmitted along the at least one connection area (7) is substantially straight.

5. The concrete segment (1) of any of the claims 3 or 4, wherein in use the load path (6) intended to be transmitted along the concrete segment (1) is substantially straight.

6. The concrete segment (1) of any of preceding claims, wherein the inward thickness increase (IT) is bigger than or equal to the outward thickness increase (OT).

7. The concrete segment (1) of claim 6, wherein the inward thickness increase (IT) is bigger than the outward thickness increase (OT) at least in a part of the at least one connection area (7).

8. The concrete segment (1) of claim 6, wherein the inward thickness increase (IT) is bigger than the outward thickness increase (OT) along the whole extension of the at least one connection area (7).

9. The concrete segment (1) of any of preceding claims, wherein the inward thickness increase (IT) and the outward thickness increase (OT) are symmetrical with regards to the central surface (5).

10. The concrete segment (1) of any of the claims 1 to 8, wherein the inward thickness increase (IT) and the outward thickness increase (OT) are asymmetrical with regards to the central surface (5).

11. The concrete segment (1) of any of preceding claims, wherein the inward thickness increase (IT) and/or the outward thickness increase (OT) comprises at least one oblique part (9) and at least one substantially vertical part (10), wherein the thickness increases in the at least one oblique part (9).

12. The concrete segment (1) of claim 11, wherein the at least one substantially vertical part (10) is adjacent to the horizontal connection flange (8).

13. The concrete segment (1) of claim 11, wherein the at least one substantially vertical part (10) is adjacent to the horizontal connection flange (8) and follows a conicity of the tower.

14. The concrete segment (1) of any of the claims 11 to 13, wherein the at least one oblique part (9) comprises an oblique part slope, wherein the oblique part slope is between 75º and 90° with a horizontal plane.

15. The concrete segment (1) of any of the claims 11 to 14, wherein the at least one oblique part (9) comprises a height and the at least one connection area (7) comprises a height, wherein the height of the at least one oblique part (9) is between 30% and 90% of the height of the at least one connection area (7).

16. The concrete segment (1) of any of preceding claims, wherein a ratio between the first wall thickness (WT1) and the second wall thickness (WT2) is between 25% and 70%.

17. The concrete segment (1) of any of preceding claims, wherein the at least one connection area (7) comprises a height, and the concrete segment (1) comprises a height, wherein the height of the at least one connection area (7) is between 5% and 30% of the height of the concrete segment (1).

18. The concrete segment (1) of any of preceding claims comprising just one connection area (7) comprising a second wall thickness (WT2) bigger than the first thickness (WT1), and is located in an upper end (12) of the segment (1).

19. The concrete segment (1) of any of the claims 1 to 17 comprising two connection areas (7), one of them disposed in an upper end (12) of the concrete segment (1) and the other disposed in a lower end (11) of the concrete segment (1), comprising a second wall thickness (WT2) bigger than the first thickness (WT1).

20. Section (20) comprising at least two concrete segments (1) of any of claims 1 to 19.

21. Set comprising at least two adjacent sections (20) of claim 20, being an upper section and a lower section, and a substantially horizontal joint (25) disposed between the two adjacent sections (20), wherein the at least one connection area (7) of the at least two concrete segments (1) of the upper section is disposed in a lower end (11) of the concrete segments (1) and the at least one connection area (7) of the at least two concrete segments (1) of the lower section is disposed in an upper end (12) of the concrete segments (1).

22. The set of claim 21, wherein the at least one connection area (7) of the at least two concrete segments (1) of the lower section comprises an outward thickness increase (OT) being substantially equal to the outward thickness increase (OT) of the at least one connection area (7) of the at least two concrete segments (1) of the upper section.

23. The set of any of the claims 21 or 22, wherein the at least one connection area (7) of the at least two concrete segments (1) of the lower section comprises the inward thickness increase (IT) being bigger than the inward thickness increase (IT) of the at least one connection area (7) of the at least two concrete segments (1) of the upper section.

24. The set of any of the claims 21 or 22, wherein the at least one connection area (7) of the at least two concrete segments (1) of the lower section comprises the inward thickness increase (IT) being equal to the inward thickness increase (IT) of the at least one connection area (7) of the at least two concrete segments (1) of the upper section.

25. Tower (30) comprising at least one set of any of the claims 21 to 24.

26. The tower (30) of claim 25 comprising at least two sets, an upper set and a lower set, wherein the outward thickness increase (OT) of the at least one connection area (7) of the second wall thickness (WT2) of the upper set is bigger than the outward thickness increase (OT) of the at least one connection area (7) of the second wall thickness (WT2) of the lower set.

27. The tower (30) of claims 25 or 26 comprising at least two sets, an upper set and a lower set, each one of them comprising an upper section and a lower section, wherein the first thickness (WT1) of the central area (2) of the upper section and the lower section of the lower set is constant, and the first thickness (WT1) of the central area (2) of the at least one of the upper section and the lower section of the upper set comprises an increasing thickness with the height, wherein preferably, the first thickness (WT1) of the central area (2) of the upper section and the lower section of the lower set are equal.

28. The tower (30) of claim 27, wherein the first wall thickness (WT1) of the lower section is smaller than the first wall thickness (WT1) of the upper section and the second wall thickness of a lower section is smaller than the second wall thickness of the upper section, for at least one of the two sets.

29. The tower (30) of claim 27, wherein the first wall thickness (WT1) of the central area of the upper section and the lower section of the lower set are equal and the second wall thickness (WT2) of the at least one connection area of the upper section and the lower section of the lower set are equal.

30. Wind turbine (40) comprising the tower (30) of any of the claims 25 to 29.

31. Mould (100) configured to cast a concrete segment of any of the claims 1 to 19, wherein the mould (100) comprises a base (101), a counter-mould (102) and two lateral sides (103), wherein the base (101) comprises:
- a central surface (104) comprising an exterior diameter (D); and
- at least one connection surface (105) disposed adjacent to one lateral side (103), wherein the at least one connection surface (105) comprises an exterior diameter (D') greater than exterior diameter (D) of the central surface (104).

32. Method of assembling a wind turbine (40) comprising at least a step of assembling the set of any of the claims 21 to 24 comprising the steps of:
- raising a lower section;
- raising the upper section onto the lower section;
- performing the horizontal joint (25) disposed between the lower section and the upper section.
